# EUROPEAN PATENT APPLICATION

(11) **EP 4 262 002 A1**
(43) Date of publication of application: **18.10.2023**
(21) Application number: 21906863.2
(22) Date of filing: 11.11.2021
(51) Int. Cl.: H01M 50/342, H01M 50/152, H01M 50/159

(54) **CYLINDRICAL SECONDARY BATTERY**

(30) Priority: 14.12.2020 KR 20200174409
(71) Applicant: Samsung SDI Co., Ltd., Yongin-si, Gyeonggi-do 17084 (KR)
(72) Inventor: KIM, Dae Kyu, Yongin-si, Gyeonggi-do 17084 (KR)
(74) Representative: Marks & Clerk LLP
(86) International application number: PCT/KR2021/016461
(87) International publication number: WO 2022/131558

(57) **Abstract**

In order to solve a technical problem according to the present disclosure, provided is a cylindrical secondary battery capable of preventing the deformation of components during the manufacture or use thereof. To this end, the present disclosure provides a cylindrical secondary battery comprising: a cylindrical can; an electrode assembly accommodated in the cylindrical can; and a cap assembly for sealing the electrode assembly by covering the cylindrical can, wherein the cap assembly includes: a cap-up portion; a cap-down portion provided below the cap-up portion; and a safety vent provided between the cap-up portion and the cap-down portion, and the elongation rates of the cap-down portion and the safety vent are different from each other.

## Description

### TECHNICAL FIELD

The present disclosure relates to a cylindrical secondary battery.

### BACKGROUND ART

In general, a cylindrical secondary battery includes a cylindrical electrode assembly, a cylindrical can accommodating the electrode assembly and electrolyte, and a cap assembly coupled to an upper opening of the can to seal the can and to allow current generated from the electrode assembly to flow to an external device.

The cap assembly may include a safety vent through which internal gas is discharged when the internal pressure of the can is higher than a critical value. Since the internal pressure of the can is generally proportional to temperature, when a secondary battery is placed in a high-temperature environment, there has been a problem in that the safety vent unexpectedly opens relatively quickly.

The above information disclosed in this Background section is only for enhancement of understanding of the background of the invention and therefore it may contain information that does not constitute prior art.

### DETAILED DESCRIPTION OF THE INVENTION

### TECHNICAL PROBLEM

The present disclosure provides a cylindrical secondary battery capable of delaying the opening time of a safety vent in a high-temperature environment.

### SOLUTION TO PROBLEM

A cylindrical secondary battery according to the present disclosure may include: a cylindrical can; an electrode assembly accommodated in the cylindrical can; and a cap assembly for sealing the electrode assembly by covering the cylindrical can, wherein the cap assembly includes: a cap-up portion; a cap-down portion provided below the cap-up portion; and a safety vent provided between the cap-up portion and the cap-down portion, and the elongation rates of the cap-down portion and the safety vent are different from each other.

The elongation rate of the cap-down portion may be higher than that of the safety vent.

The safety vent and the cap-down may include aluminum or an aluminum alloy.

The safety vent may include an aluminum-manganese (Al-Mn)-based alloy, and the cap-down portion may include pure aluminum having a purity higher than 99%.

The safety vent may include a 3003- or 3005-series aluminum alloy, and the cap-down portion may include a 1050-series aluminum alloy.

The safety vent and the cap-down portion may be connected to each other by laser welding.

The safety vent may include a vent contact part that is in contact with the cap-up, a vent inclined part that is inclined downward from the vent contact part, a vent bottom part that extends in parallel from the vent inclined part, and a vent protruding part that protrudes from the vent bottom part and is connected to the cap-down portion.

The cap-down portion may include: a cap-down contact part that is in contact with the safety vent through a connection ring; a cap-down inclined part that is inclined downward from the cap-down contact part; a cap-down bottom part that extends in parallel from the cap-down inclined part; a through hole that penetrates the cap-down part; a cap-down concave part that is formed on a lower surface of the cap-down bottom part and is connected to the vent protruding part.

### ADVANTAGEOUS EFFECTS OF INVENTION

The present disclosure provides a cylindrical secondary battery capable of delaying the opening time of a safety vent in a high-temperature environment. In some examples, since the elongation rate of the safety vent and the cap-down portion connected to each other are different, the opening time of the safety vent may be delayed in a high-temperature environment. In some examples, the elongation rate of the cap-down portion is higher than the elongation rate of the safety vent, and thus, when the internal pressure of the can increases in a high-temperature environment, the cap-down portion and the safety vent may be separated (or broken) after the cap-down portion is sufficiently elongated, thereby delaying the opening time of the safety vent in the high-temperature environment.

### BRIEF DESCRIPTION OF DRAWINGS

FIGS. 1A, 1B, and 1C are a perspective view, a cross-sectional view, and an exploded perspective view illustrating an exemplary cylindrical secondary battery according to the present disclosure.
FIG. 2 is a cross-sectional view showing an exemplary cap assembly in an exemplary cylindrical secondary battery according to the present disclosure.
FIGS. 3A and 3B are half cross-sectional views illustrating an operation of an exemplary cap assembly in an exemplary cylindrical secondary battery according to the present disclosure.
FIG. 4 is a half-sectional view illustrating an operation of a cap assembly in a cylindrical secondary battery according to a comparative example.
FIG. 5 is a graph illustrating a relationship between internal pressure and displacement of an exemplary safety vent according to the present disclosure and a safety vent according to a comparative example.

### MODE FOR CARRYING OUT THE INVENTION

Examples of the present disclosure are provided to more completely explain the present disclosure to those skilled in the art, and the following examples may be modified in various other forms. The present disclosure, however, may be embodied in many different forms and should not be construed as being limited to the example (or exemplary) embodiments set forth herein. Rather, these example embodiments are provided so that this invention will be thorough and complete and will convey the aspects and features of the present disclosure to those skilled in the art.

In addition, in the accompanying drawings, sizes or thicknesses of various components are exaggerated for brevity and clarity, and like numbers refer to like elements throughout. As used herein, the term "and/or" includes any and all combinations of one or more of the associated listed items. In addition, it will be understood that when an element A is referred to as being "connected to" an element B, the element A can be directly connected to the element B or an intervening element C may be present therebetween such that the element A and the element B are indirectly connected to each other.

The terminology used herein is for the purpose of describing particular embodiments only and is not intended to be limiting of the invention. As used herein, the singular forms are intended to include the plural forms as well, unless the context clearly indicates otherwise. It will be further understood that the terms that the terms "comprise or include" and/or "comprising or including," when used in this specification, specify the presence of stated features, numbers, steps, operations, elements, and/or components, but do not preclude the presence or addition of one or more other features, numbers, steps, operations, elements, components, and/or groups thereof.

It will be understood that, although the terms first, second, etc. may be used herein to describe various members, elements, regions, layers and/or sections, these members, elements, regions, layers and/or sections should not be limited by these terms. These terms are only used to distinguish one member, element, region, layer and/or section from another. Thus, for example, a first member, a first element, a first region, a first layer and/or a first section discussed below could be termed a second member, a second element, a second region, a second layer and/or a second section without departing from the teachings of the present disclosure.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the element or feature in the figures is turned over, elements described as "below" or "beneath" other elements or features would then be oriented "on" or "above" the other elements or features. Thus, the exemplary term "below" can encompass both an orientation of above and below.

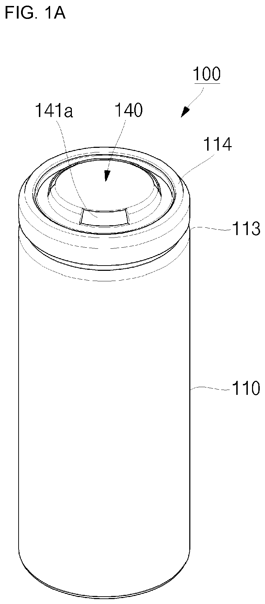

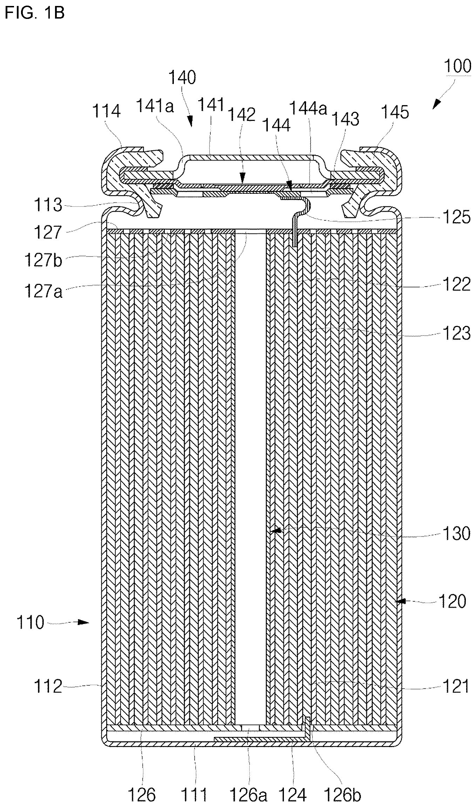

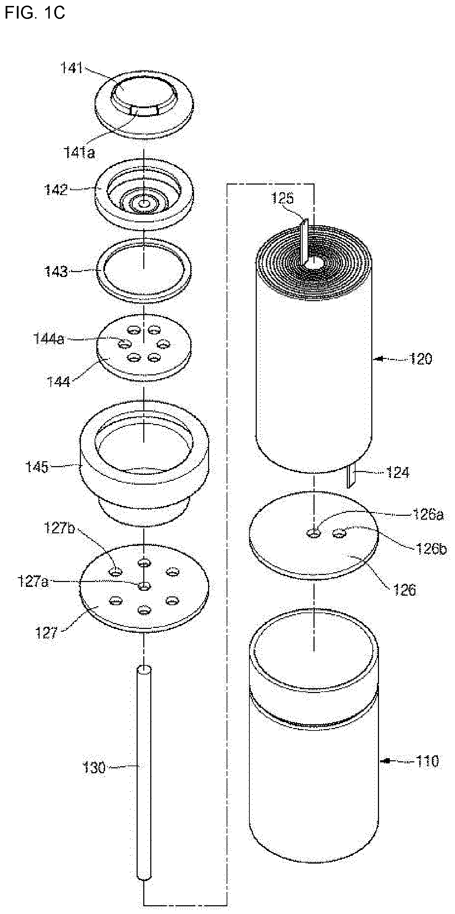

FIGS. 1A, 1B, and 1C are a perspective view, a cross-sectional view, and an exploded perspective view illustrating a secondary battery 100 according to various embodiments of the present disclosure.

As shown in FIGS. 1A , 1B and 1C, the secondary battery 100 according to the present disclosure may include a cylindrical can 110, a cylindrical electrode assembly 120, and a cap assembly 140. In some examples, the secondary battery 100 may further include a center pin 130 coupled to the electrode assembly 120.

The cylindrical can 110 may include a circular bottom portion 111 and a cylindrical side portion 112 extending a predetermined length upward from the bottom portion 111. During the manufacturing process of the secondary battery, a top portion of the cylindrical can 110 is open. Therefore, during the assembling process of the secondary battery, the electrode assembly 120 may be inserted into the cylindrical can 110 together with an electrolyte. In some examples, the cylindrical can 110 may include steel, a steel alloy, aluminum, an aluminum alloy, or an equivalent thereof. In some examples, in order to prevent the electrode assembly 120 and the cap assembly 140 from escaping to the outside, the cylindrical can 110 may include, with respect to the cap assembly 140, a beading part 113 that is recessed into the lower portion around the cap assembly 140 and a crimping part that is bent into the upper portion.

The electrode assembly 120 may be accommodated inside the cylindrical can 110. The electrode assembly 120 may include a negative electrode plate 121 coated with a negative electrode active material (e.g., graphite, carbon, etc.) and a positive electrode plate coated with a positive electrode active material (e.g., transition metal oxide (LiCoO₂, LiNiO₂, LiMn₂O₄, etc.)) 122 and a separator 123 positioned between the negative electrode plate 121 and the positive electrode plate 122 to prevent a short circuit and to allow only the movement of lithium ions. In some examples, the negative electrode plate 121, the positive electrode plate 122, and the separator 123 may be wound in a substantially cylindrical shape. In some examples, the negative plate 121 may include a copper (Cu) or nickel (Ni) foil, the positive plate 122 may include an aluminum (Al) foil, and the separator 123 may include polyethylene (PE) or polypropylene (PP), respectively. In some examples, a negative electrode tab 124 protruding and extending downward by a certain length may be welded to the negative electrode plate 121, and a positive electrode tab 125 protruding upward by a certain length may be welded to the positive electrode plate 122, but the reverse is also possible. In some examples, the negative electrode tab 124 may include a copper or nickel material, and the positive electrode tab 125 may include an aluminum material.

In some examples, the negative electrode tab 124 of the electrode assembly 120 may be welded to the bottom portion 111 of the cylindrical can 110. Therefore, the cylindrical can 110 may operate as a negative electrode. Of course, on the contrary, the positive electrode tab 125 may be welded to the bottom portion 111 of the cylindrical can 110, and in this case, the cylindrical can 110 may operate as a positive electrode.

In some examples, a first insulating plate 126 coupled to the cylindrical can 110 and having a first hole 126a in the center and a second hole 126b outside thereof, may be interposed between the electrode assembly 120 and the bottom portion 111. The first insulating plate 126 may prevent the electrode assembly 120 from electrically contacting the bottom portion 111 of the cylindrical can 110. In some examples, the first insulating plate 126 may prevent the positive plate 122 of the electrode assembly 120 from electrically contacting the bottom portion 111. In some examples, the first hole 126a may allow gas to quickly move upward through the center pin 130 when a large amount of gas is generated due to abnormality of the secondary battery, and the second hole 126b may allow the negative electrode tab 124 to pass therethrough and be welded to the bottom portion 111.

In some examples, a second insulating plate 127 coupled to the cylindrical can 110 and having a first hole 127a in the center and a plurality of second holes 127b outside thereof, may be interposed between the electrode assembly 120 and the cap assembly 140. The second insulating plate 127 may prevent the electrode assembly 120 from electrically contacting the cap assembly 140. In some examples, the second insulating plate 127 may prevent the negative electrode plate 121 of the electrode assembly 120 from electrically contacting the cap assembly 140. In some examples, the first hole 127a may allow gas to quickly move to the cap assembly 140 when a large amount of gas is generated due to abnormality of the secondary battery, and the second hole 127b may allow the positive electrode tab 125 to pass therethrough and be welded to the cap assembly 140. In addition, the remaining second holes 127b may allow the electrolyte to quickly flow into the electrode assembly 120 in an electrolyte injection process.

In some examples, the first holes 126a and 127a of the first and second insulating plates 126 and 127 are formed to smaller diameters of than the center pin 130, thereby preventing the center pin 130 from electrically contacting the bottom portion 111 of the cylindrical can 110 or the cap assembly 140 due to an external impact.

In some examples, the center pin 130 has a shape of a hollow circular pipe and may be coupled to approximately the center of the electrode assembly 120. In some examples, the center pin 130 may include steel, a steel alloy, aluminum, an aluminum alloy, or polybutylene terephthalate. The center pin 130 serves to suppress deformation of the electrode assembly 120 during charging and discharging of the battery and serves as a passage for gas generated inside the secondary battery. In some cases, the center pin 130 may be omitted.

The cap assembly 140 may include a cap-up portion 141 having a plurality of through holes 141a, a safety vent 142 located under the cap-up portion 141, a connection ring 143 located below the safety vent 142, and a cap-down portion 144 located below the safety vent 142 and the connection ring 143, having a plurality of through holes 144a, and electrically connected to the positive electrode tab 125. In some examples, the cap assembly 140 may further include an insulating gasket 145 that insulates the cap-up portion 141, the safety vent 143, and the cap-down portion 144 from the side portion of the cylindrical can 110.

In some examples, the insulating gasket 145 may be compressed substantially between the beading part 113 and the crimping part 114 formed on the side portion 111 of the cylindrical can 110. In some examples, the through hole 141a of the cap-up portion 141 and the through hole 144a of the cap-down portion 144 may discharge internal gas to the outside when abnormal pressure is generated inside the cylindrical can 110. In some examples, the internal gas may invert the safety vent 143 upward through the through hole 144a of the cap-down portion 144, and thus, the safety vent 143 is electrically discharged from the cap-down portion 144. Then, while the safety vent 144 is torn (opened), the internal gas may be discharged to the outside through the through hole 141a of the cap-up portion 141.

In some examples, an electrolyte (not shown) may be injected into the cylindrical can 110, which enables movement of lithium ions generated by an electrochemical reaction in the negative electrode plate 121 and the positive electrode plate 122 inside the battery during charging and discharging. The electrolyte may include a non-aqueous organic electrolyte that is a mixture of a lithium salt and a high-purity organic solvent. In some examples, the electrolyte may include a polymer using a polymer electrolyte or a solid electrolyte.

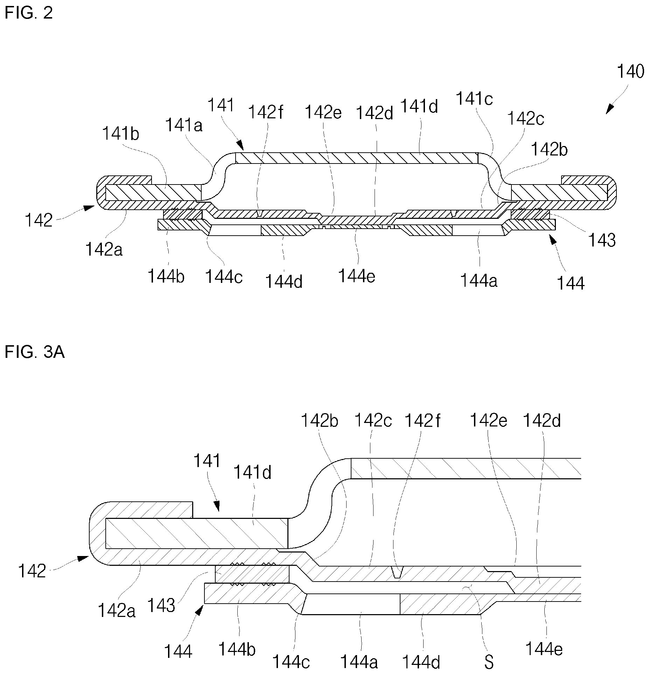

FIG. 2 is a cross-sectional view showing an exemplary cap assembly 140 in an exemplary cylindrical secondary battery 100 according to the present disclosure.

As shown in FIG. 2, the cap assembly 140 may include a cap-up portion 141, a safety vent 142 disposed under the cap-up portion 141, a connection ring 143 disposed below the safety vent 142, and a cap-down portion 144 disposed below the connection ring 143.

In some examples, the cap-up portion 141 may include a cap-up contact part 141b that is in contact with the safety vent 142, a cap-up inclined part 141c that is inclined upward from the cap-up contact part 141b and has a plurality of through holes 141a, and a cap-up ceiling part 141d that extends in parallel from the cap-up inclined part 141c. In some examples, an external device may be electrically connected to the cap-up ceiling part 141d.

In some examples, the safety vent 142 may include a vent contact part 142a that is in contact with the cap-up contact part 141b of the cap-up portion 141, a vent inclined part 142b that is inclined downward from the vent contact part 142a, a vent bottom part 142c that extends in parallel from the vent inclined part 142b, and a vent protruding part 142d that protrudes from the vent bottom part 142c and is in contact with (connected or linked to) the cap-down portion 144.

In some examples, the diameter (length or width) of the vent protruding part 142d may be approximately 60% to approximately 100% of the diameter (length or width) of the vent bottom part 142c. In some examples, the vent protruding part 142d may be welded to the cap-down portion 144 by laser or ultrasonic waves, and thus, the vent protruding part 142d and the cap-down portion 144 may be in contact with (connected or linked to) each other.

In some examples, the vent contact part 142a may be bent multiple times to be in contact with the bottom, side, and top surfaces of the cap-up contact part 141b, respectively. In some examples, the vent bottom part 142c may further include a substantially flat vent concave part 142e formed on an upper surface opposite to the vent protruding part 142d. In some examples, the flat vent concave part 142e may be formed by being pressed by using a mold for forming the vent protruding part 142d on the vent bottom part 142c. In some examples, the vent bottom part 142c of the safety vent 142 may further include a substantially linear vent concave part 142f formed on an upper surface opposite to the vent protruding part 142d. In some examples, the vent concave part 142f in the form of a line is broken (opened) when the pressure inside the battery is higher than a preset pressure, and thus, the internal gas is discharged to the outside.

In some examples, the cap-down portion 144 may include a cap-down contact part 144b that is in contact with the connection ring 143, a cap-down inclined part 144c that is inclined downward from the cap-down contact part 144b, and a cap-down bottom part 144d that extends in parallel from the cap-down inclined part 144c. In some examples, the connection ring 143 may be interposed between the vent contact part 142a and the cap-down contact part 144b. In some examples, the cap-up portion 141, the safety vent 142, and the cap-down portion 144 include a metal material (e.g., aluminum, copper, or nickel), while the connection ring 143 includes an insulating material (e.g., polypropylene or polyethylene). Here, the metal materials which form the safety vent 142 and the cap-down portion 144, and the elongation rates thereof will be described again below.

In some examples, the cap-down bottom part 144d may further include a through hole 144a that penetrates the cap-down bottom part 144d. In some examples, a separation space S may be provided between the vent bottom part 142c and the cap-down bottom part 144d. In some examples, a vertical separation distance between the vent bottom part 142c and the cap-down bottom part 144d may be about 0.20 mm to about 30 mm. As the separation distance increases, a wider elongation space of the cap-down portion 144 in the upward direction may be secured. In some examples, the cap-down portion 144 may further include a flat cap-down concave part 144e formed on a lower surface. In some examples, the negative electrode tab 125 (see FIG. 1B ) may be welded to the outer cap-down bottom part 144d of the flat cap-down concave part 144e.

In some examples, the elongation rate (%) of the cap-down portion 144 and the elongation rate (%) of the safety vent 142 may be different from each other.

In some examples, the elongation rate (%) of the cap-down portion 144 may be higher than the elongation rate (%) of the safety vent 142.

In some examples, the safety vent 142 and the cap-down portion 144 may include aluminum or an aluminum alloy, but the elongation rate (%) of the cap-down portion 144 may be greater than the elongation rate (%) of the safety vent 142.

In some examples, the cap-down portion 144 may include 1000-series aluminum, and the safety vent 142 may be an aluminum alloy of any one of 2000 series, 3000 series, 4000 series, 5000 series, 6000 series, and 7000 series.

In some examples, the cap-down portion 144 may include pure aluminum having a purity greater than 99%, and the safety vent 142 may include any one of an Al-Cu-based alloy, an Al-Mn-based alloy, an Al-Si-based alloy, an Al-Mg-based alloy, an Al-Mg-Si-based alloy, and an Al-Zn-(Mg, Cu)-based alloy.

In some examples, the cap-down portion 144 may include a 1050 series aluminum alloy, and the safety vent 142 may include a 3003 series or a 3005 series aluminum alloy.

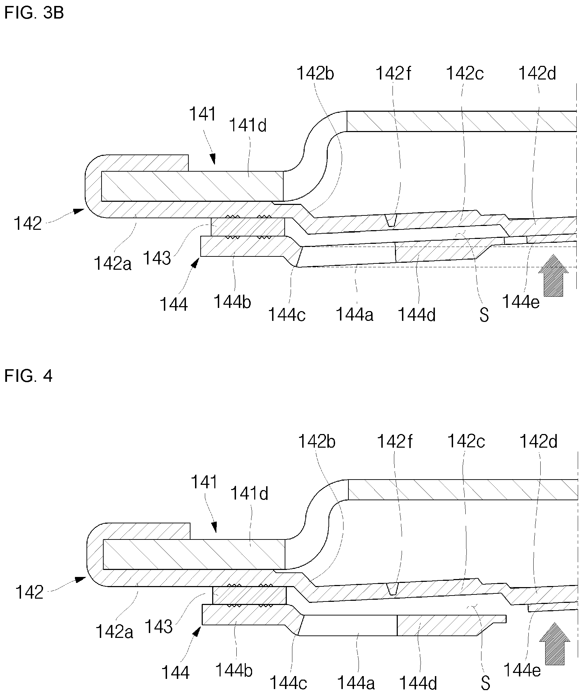

FIGS. 3A and 3B are half cross-sectional views illustrating an operation of an exemplary cap assembly in an exemplary cylindrical secondary battery according to the present disclosure, and FIG. 4 is a half-sectional view illustrating an operation of a cap assembly in a cylindrical secondary battery according to a comparative example.

Here, FIG. 4 shows the operation of the safety vent 142 according to the increase in internal pressure, in a case where the materials of the safety vent 142 and the cap-down portion 144 are the same, for example, in a case where the materials of the safety vent 142 and the cap-down portion 144 are aluminum alloys, which are both 3000-series rigid materials.

As shown in FIGS. 3A and 3B, when the elongation rate of the cap-down portion 144 is greater than the elongation rate of the safety vent 142 (that is, when the material of the cap-down is a ductile material), the safety vent 142 may be separated from the cap-down portion 144 after the cap-down portion 144 is elongated upward by a predetermined length as the internal pressure of the can 110 increases. Thereafter, when the internal pressure of the can 110 further increases, the safety vent 142 is eventually broken and opened, and thus, the gas inside the can 110 is discharged to the outside. In particular, when the internal pressure of the can 110 reaches a critical value in a state in which the secondary battery 100 is placed in a high-temperature environment of, for example, approximately 80 °C to approximately 100° C, the safety vent 142 may not immediately operate. However, as described above, the safety vent 142 may be separated from the cap-down portion 144 after the cap-down portion 144 is elongated upward, and the safety vent 142 may then be opened, thereby delaying the operation of the safety vent 142 when the secondary battery 100 is placed in a high-temperature environment.

However, as in comparative example shown in FIG. 4, for example, when both the safety vent 142 and the cap-down portion 144 are made of aluminium alloys, which are rigid 3000-series materials, the safety vent 142 is immediately separated from the cap-down portion 144 without elongation of the cap-down portion 144, and the safety vent 142 is immediately opened, and thus, the safety vent 142 is opened too quickly.

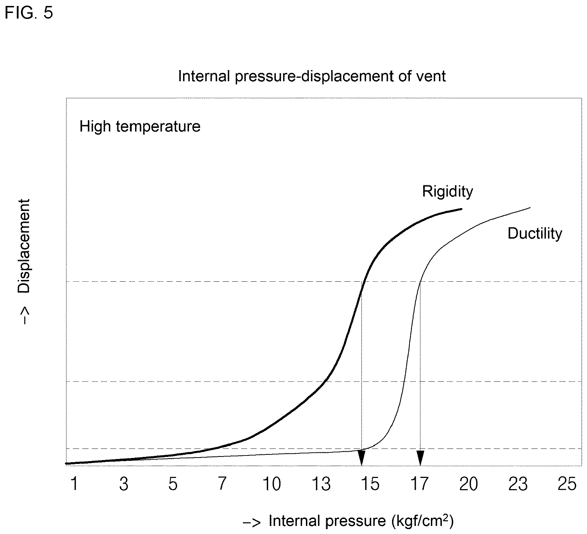

FIG. 5 is a graph illustrating a relationship between internal pressure and displacement of an exemplary safety vent according to the present disclosure and a safety vent according to a comparative example. In FIG. 5, the X-axis indicates the internal pressure (kgf/cm²), and the Y-axis indicates the displacement of safety vent.

As shown in FIG. 5, when both the cap-down and the safety vent are made of rigid materials, as in comparative example, in a high-temperature environment, the safety vent is opened at an internal pressure of approximately 14, whereas, when the cap-down is made of a ductile material and the safety vent is made of a rigid material, as in example embodiment, the safety vent was opened at an internal pressure of approximately 17. Accordingly, in a high-temperature environment, when the material of the cap-down is softer than the material of the safety vent, the opening time of the safety vent can be delayed, and thus the high-temperature characteristics of the secondary battery can be improved.

Although the foregoing embodiment has been described to practice the present disclosure, this embodiment is set forth for illustrative purposes and do not serve to limit the disclosure. Those skilled in the art will readily appreciate that many modifications and variations can be made, without departing from the spirit and scope of the disclosure as defined in the appended claims, and such modifications and variations are encompassed within the scope and spirit of the present disclosure.

## Claims

1. A cylindrical secondary battery comprising:
a cylindrical can;
an electrode assembly accommodated in the cylindrical can; and
a cap assembly for sealing the electrode assembly by covering the cylindrical can,
wherein the cap assembly includes: a cap-up portion; a cap-down portion provided below the cap-up portion; and a safety vent provided between the cap-up portion and the cap-down portion, and the elongation rates of the cap-down portion and the safety vent are different from each other.

2. The cylindrical secondary battery of claim 1, wherein the elongation rate of the cap-down portion is higher than that of the safety vent.

3. The cylindrical secondary battery of claim 1, wherein the safety vent and the cap-down portion include aluminum or an aluminum alloy.

4. The cylindrical secondary battery of claim 1, wherein the safety vent includes an aluminum-manganese (Al-Mn)-based alloy, and the cap-down portion includes pure aluminum having a purity higher than 99%.

5. The cylindrical secondary battery of claim 1, wherein the safety vent includes a 3003- or 3005-series aluminum alloy, and the cap-down portion includes a 1050-series aluminum alloy.

6. The cylindrical secondary battery of claim 1, wherein the safety vent and the cap-down portion are connected to each other by laser welding.

7. The cylindrical secondary battery of claim 1, wherein the safety vent include a vent contact part in contact with the cap-up, a vent inclined part that is inclined downward from the vent contact part, a vent bottom part that extends in parallel from the vent inclined part, and a vent protruding part that protrudes from the vent bottom part and is connected to the cap-down portion.

8. The cylindrical secondary battery of claim 7, wherein the cap-down portion includes: a cap-down contact part that is in contact with the safety vent through a connection ring; a cap-down inclined part that is inclined downward from the cap-down contact part; a cap-down bottom part that extends in parallel from the cap-down inclined part; a through hole that penetrates the cap-down part; a cap-down concave part that is formed on a lower surface of the cap-down bottom part and is connected to the vent protruding part.
